# EUROPEAN PATENT SPECIFICATION

(11) **EP 1 444 072 B1**
(45) Date of publication and mention of the grant of the patent: **03.12.2008**
(21) Application number: 02778162.4
(22) Date of filing: 20.10.2002
(51) Int. Cl.: B25J 13/02, G05B 19/42

(54) **A SYSTEM AND METHOD FOR COMMUNICATION BETWEEN AN INDUSTRIAL ROBOT AND A TPU**
SYSTEM UND VERFAHREN ZUR KOMMUNIKATION ZWISCHEN EINEM INDUSTRIEROBOTER UND EINER PROGRAMMIERHANDGERÄTEEINHEIT
SYSTEME ET PROCEDE DE COMMUNICATION ENTRE UN ROBOT INDUSTRIEL ET UNE UNITE D'APPRENTISSAGE PORTABLE (TPU)

(30) Priority: 23.10.2001 SE 0103532
(43) Date of publication of application: 11.08.2004
(73) Proprietor: ABB AB, 721 83 Västerås (SE)
(72) Inventor: CARLSON, Erik, N-1450 Nesoddtangen (NO); JOHANNESSEN, Svein, N-0376 Oslo (NO); ENDRESEN, Jan, N-1385 Asker (NO)
(74) Representative: Dahlstrand, Björn
(86) International application number: PCT/SE2002/001898
(87) International publication number: WO 2003/035335

(56) References cited:
- DE-U1- 20 010 326
- GB-A- 2 359 648
- US-A- 5 186 629
- US-A- 5 396 266
- US-A- 6 158 136
- PATENT ABSTRACTS OF JAPAN vol. 1999, no. 8 30 June 1999 & JP 11 073 201 A (YASKAWA ELECTRIC CORP.) 16 March 1999

## Description

### TECHNICAL FIELD

The present invention relates to an industrial robot system, including a manipulator and a control unit having means for automatically operating the manipulator. A portable operator control device is connected to the control unit having means for teaching and manually operating the manipulator. The invention also relates to a method for communication in an industrial robot system. Especially the invention relates to a communication control. Particularly the invention relates to a wireless teach pendant unit.

An operator control device is a portable operator control device denoted a teach pendant unit, TPU, in the following. A TPU normally comprises operator control means and a visual display unit. The operator control means usually is a joystick, a ball, a set of buttons or any combination of these.

### BACKGROUND OF THE INVENTION

An industrial robot is programmed to carry out work or a work cycle along an operating path. In order to program or teach the robot the work cycle, the robot is manipulated to positions along the desired operating path. These positions are stored as instructions in a memory in the control unit. Other information, such as desired robot movement velocity, may also be stored in the memory. During operation of the robot, the program instructions are executed, thereby making the robot operate as desired.

A robot is operated in at least two modes: automatic and manual. By switching a mode selector key on a control panel on the control unit, the choice of mode, in which the robot shall operate, is made. When the robot is in the manual mode, the TPU has the exclusive right to operate the robot and thus no other operating control device or control unit is allowed to control the robot.

An industrial robot is usually placed in robot cells in order to facilitate the automation of a complex series of actions under safe conditions. When one of the robots in a robot cell is to be operated under manual control using a TPU, it is important that the TPU is communicating with and controlling the right robot. Thus, in order to accomplish a safe control of an industrial robot, it is important to have absolute confidence in the control of the robot. The operator must be fully aware of the current mode of the connection between the control unit and the TPU.

In an industrial robot system where the TPU is connected to the control unit by a cable, the operator can easily be aware of the current mode of said connection. The cable is preferably shielded and no other communication systems can interfere with the two connected units. Under normal conditions the control unit periodically transmits data to the TPU. Upon receiving this data the TPU responds by transmitting a response signal back to the control unit. Thus the control unit asks the TPU if this is in operation. The control unit judges from said response signal if the TPU is in normal condition. If the emergency switch has been activated the response signal carries that information and the control unit executes the emergency stop. The length of the cable defines the maximum distance between a TPU cable connected to an industrial robot and the control unit.

In an abnormal situation, e.g. when the operating unit is disconnected or the cable is cut off, the TPU does not transmit a responding signal. The absence of a responding signal is a sign to the control unit that there is an emergency stop situation and the emergency stop will be activated.

However, the TPU cable end up entangled on the floor in industrial robot systems with several robots and hence several cables. The cables are often lying on the floor and there is an obvious risk of damage by a vehicle running over. There is also a risk of cable entanglement by which an operator will have difficulties in knowing which TPU belongs to which robot. Furthermore, a TPU connected by cable to a control unit limits the degree of freedom that an operator needs to perform an effective operation with the robot.

In accordance with the conditions mentioned above, the development of industrial robot systems is in one way leading to a wireless TPU for the robot control. A wireless connection eliminates most of the negative consequences of using a cable connection. On the other hand, a wireless connection introduces some problems of its own. Most notably is the problem of ensuring that the TPU is associated with the correct robot and the problem of verifying that the wireless connection works correctly.

In both cases, there is a risk of personal injury if the operator believes that he is operating and controlling a certain robot but instead is out of contact with this particular robot. Thus, there is a strong need to ensure connection between the robot and the TPU when using a TPU not physically connected to the robot. In other words, it is of great importance that the operator is immediately made aware of a sudden communication loss of the TPU. Since the operator usually is concentrated on the robot and there may be a great deal of ambient noise, the usual warnings (blinking light, buzzer) are ineffective and not reliable.

One security arrangement in an industrial robot system with a robot working in a cell is designed as follows. If something abnormal happens in the cell, an emergency stop is activated and the operating robot is stopped and remains standing still. After reestablishment of a normal condition in the cell, the robot will be restarted. In this situation, a stopped robot does not disturb the rest of the robot system. Then, there is a higher degree of security stop and that is the emergency stop for stopping the whole robot system. This is activated when something extraordinary happens somewhere in the robot system. Closing down the whole robot system is undesirable since it necessitates a great deal of work for the operator to return the system to operation conditions.

From the Japanese patent application 11-73201 a wireless control system is previously known. The object of the invention is to provide a communication system wherein the specific communication of emergency stop control can be carried out by wireless means in a manner equivalent to cable communication. The solution of the invention is in the design of the system with data exchange by means of wireless or optical communication between a first device and a second device. The first device comprises a transmitting part and a receiving part. The second device comprises a receiving part and a transmitting part, which returns arbitrary data in response to data received from said first device at a normal time, and stops said response at an abnormal condition. The first device judges the condition to be abnormal by recognizing the received data to be arbitrary data. It also judges the condition to be normal by recognizing the received data to be specific data. Thus, specific communications such as emergency stop control is carried out by wireless means in a manner equivalent to the prior cable communication, and the system is made fail-safe.

A wireless connection is less predictable than a wired connection, and the communication between the TPU and the control unit may fail, be loosed or be broken by the system due to either distance, signal interference, radio shadows, current interruptions or battery failure, all of which will cause a communication loss. All different communication losses are denoted "a broken data link" and all different operating communications are denoted "a connected data link" in the following.

If a broken data link occurs, arrangements required by safety regulations will immediately stop the robot. These security arrangements are further programmed to measure the time for the robot standing still in accordance with the situation mentioned above. When the robot has been standing still for a predetermined time due to the broken data link, the emergency stop is activated and all activities in the cell will be stopped. The time between these events is chosen in order to comply with the safety regulations in force.

Despite necessity of security systems, a sudden shutdown of a robot system is a very frustrating situation for the operator. It requires time and energy for realizing the situation. It also takes a great deal of effort and time to reestablish the working condition in the robot system. This is a situation every operator is anxious to avoid, especially when there is no reason for the stop.

According to the conditions mentioned above, there is a need for an industrial robot system containing a TPU, which system has the function of immediately making an operator aware of a broken data link. More precisely, there is a need for a TPU, which has the character of immediately indicating a broken data link to an operator carrying the TPU.

### SUMMARY OF THE INVENTION

The object of the invention is to facilitate the work with a portable operator control device, for operating an industrial robot system, defined above. A second object of the invention is to provide an industrial robot system with increased access for the operator without limiting the security. A third object of the invention is to submit an industrial robot system with increased operation safety.

These objects are achieved according to the invention in a first aspect with a portable operator control device comprising the features of the independent claim 1, in a second aspect with an industrial robot system comprising the characteristic features of independent claim 11, and in a third aspect with a method for communication in an industrial robot system comprising the features of the independent claim 12. According to the invention, these objects also are achieved in a computer program product comprising the features of the independent claim 20, and a use according to claim 23. Preferred embodiments are described in the dependent claims.

According to the invention, one or a plurality of robots are controlled by one TPU unit. Each TPU is communicating with the control unit only locally. There is a limit built into the system as to how far from the control unit a TPU is allowed to operate. Thus, there is a maximum operating distance for the TPU, which distance usually varies in different directions around the control unit. Often, the maximum distance involves intervals defined not to allow operation. Therefore, distances together with directions define one or a plurality of work areas within which the TPU is allowed connection to the control unit under secure conditions. These distances, directions and defined areas are invisible but an important security limitation since an operator has difficulties in knowing where to be positioned.

When an activated TPU is moved away from the control unit longer than the mentioned maximum operating distance, the system is programmed to break the connection to the control unit. Thus, if an operator, bringing a wireless TPU connected to the robot, is walking too far away from the control unit, the control unit will break the data link to the TPU. The data link will also be broken when the TPU positioned in a defined work area A suddenly passes the border into the exterior area. Thus, it is an object of the invention to connect/disconnect a TPU due to the exact position of the TPU.

The solution according to the first aspect of the invention is to provide an industrial robot system with at least one industrial robot comprising a manipulator, a control unit for controlling the manipulator, a portable operator control device, TPU, for teaching and manually operating the robot. The TPU is adapted for communication with the control unit via a data link. The TPU comprises indicating means arranged to indicate a broken data link through tactile feedback by touch perception to the body of an operator bringing the control device during operation. Consequently, the operator bringing a TPU according to the invention will notice the disconnection of the TPU and has the possibility to reenter the operating distance before the emergency stop for stopping the whole robot system is activated.

According to one embodiment of the invention, the data link in the industrial robot system is a wireless data link. In another embodiment of the invention, the link is a radio link connected to and communicating through a network. In yet another embodiment, the TPU comprises a unit sold under the name of Bluetooth.

According to the invention, indicating means is arranged in the TPU for indication of a broken data link through tactile feedback by touch perception to the body of the operator. According to the invention, the indicating means is either an active or a passive indicating means. The operator is usually carrying the operator control device and both the active and passive indication through physical perception is a tactile feedback to the hand.

An active indicating means is defined to create a mechanical force, which transfers information to an operator, without the operator asking for it. In one embodiment of the invention, the active indicating means comprises vibrating means operable to vibrate due to a broken data link. In another embodiment, the vibrating means is included in the TPU. In another embodiment, the vibrating means is included in an operator control means. In yet another embodiment, the operator control means is a joystick operable to vibrate due to a broken data link.

A passive indicating means is defined to create a mechanical movement reaction, which is arranged to be stiffer or looser upon indication. According the invention, the passive indicating means is included in an operator control means. In one embodiment, the operator control is arranged to introduce a mechanical resistance to movement during operation, when the data link is communicating in a normal way. Upon a broken data link, the passive indicating means is arranged to loosen or stiffen the resistance to movement in the operator control means. The operator control means is usually a joystick, a ball or a set of buttons. In one embodiment of the invention, the operator control means is a joystick and the passive indicating means comprises resilient means operable to introduce a mechanical resistance to manual movement of the joystick. In this embodiment, a passive indication comprises a loosening of the mechanical resistance in the joystick.

In one embodiment, the mechanical resistance is created by a spring-loading resilient means included in the indicating means. Resilience control means is arranged to control the spring-loading force of the resilient means. In one embodiment of the invention, the resilience control means comprises at least one regulating means arranged to regulate the spring-force of the resilient means. In another embodiment of the invention the, regulating means comprises a non-elastic thread arranged as a mechanical connection between the regulating means and the resilient means. The regulating means comprises tightening means arranged to tighten/loosen the thread in the regulating means and establish the mechanical movement reaction of the indicating means. In yet another embodiment of the invention, the passive indications means comprises magnetic means operable to introduce a mechanical resistance to movement of the operator control means.

In one embodiment of the invention, the data link is operable due to both a steady stream of command messages from the control unit to the TPU and messages in response from the TPU back to the control unit.

In another embodiment of the invention, the data link is operable due to both a steady stream of command messages from the TPU to the control unit and messages in response from the control unit to the TPU.

In yet another embodiment of the invention, the data link is operable within one or a plurality of defined work areas A.

The solution according to the second aspect of the invention is to provide a portable TPU for teaching and manually operating a manipulator in an industrial robot system, comprising a control unit. The TPU is adapted for communication with the control unit via a data link. The TPU comprises indicating means, which is arranged to physically indicate a broken data link by touch perception to the body of an operator bringing the TPU during operation.

According to the invention, the TPU and the control unit are communicating via a wireless data link. In one embodiment of the invention, the link is a radio link connected to and communicating through a network. In yet another embodiment, the TPU comprises wireless communication means known under the name of Bluetooth. Moreover, the portable TPU comprises the same characteristic features as the TPU provided for in embodiments of the first aspect of the invention.

The solution according to the third aspect of the invention is to provide a method for control of an industrial robot system with an industrial robot comprising a manipulator, a portable TPU and a control unit comprising a processor. The TPU communicates with the control unit via a data link for manually programming and operating the manipulator. Upon a broken data link, an indicating means is activated to draw attention to the broken data link by touch perception of the body of the operator. Upon connection reestablishment, the indicating means is deactivated to cease the touch perception of the body of the operator.

According to the invention, the TPU and the control unit are communicating via a wireless data link. In one embodiment of the invention, the link is a radio link connected to and communicating through a network. In yet another embodiment, the TPU comprises wireless communication means known under the name of Bluetooth.

In one embodiment of the method according to the invention, the data link is communicating due to both a steady stream of command messages from the control unit to the TPU and messages in response from the TPU back to the control unit.

In another embodiment of the method according to the invention, the data link is communicating due to both a steady stream of command messages from the TPU to the control unit and messages in response from the control unit to the TPU.

According to the methods mentioned above, a broken data link is due to a broken stream of command messages or is due to a broken stream of response messages. In another method according to the invention, the data link is broken due to an instruction from the control unit.

In one embodiment of the invention, the TPU communicates via a wireless data link. Indicating means is actively or passively indicating a broken data link through tactile feedback by touch perception of the body of the operator.

The security arrangements are programmed to in some way accept the TPU getting closer to the control unit within said chosen time limit. Consequently, if the TPU comes close enough to the control unit in due time, the emergency stop will be reset and the robot reactivated. Then, the operator has the possibility to avoid a sudden shutdown of the robot system.

### BRIEF DESCRIPTION OF THE DRAWING

The invention will be explained more closely by the description of different embodiments thereof and with reference to the appended drawing in which:
Fig. 1a is a communication system with a cable connected TPU,
Fig. 1b is a TPU according to the invention provided for wireless communication,
Fig. 2 shows a TPU, comprising vibrating means,
Fig. 3 shows a TPU including vibrating means integrated in a joystick.
Fig. 4 schematically shows a cross section of a joystick comprising four resilient means in accordance with the invention.
Fig. 5 shows the joystick of fig. 4 comprising resilience control means and providing mechanical resistance to movement in accordance with the invention,
Fig. 6 shows the joystick in fig. 5 in a relaxed position lacking mechanical resistance to movement in accordance with the invention,
Fig. 7 schematically shows a cross section of a joystick comprising a resilient means including a regulating means creating mechanical resistance to movement of the joystick.
Fig. 8 shows the joystick in fig. 7 in a relaxed position lacking mechanical resistance to movement.
Fig. 9 schematically shows a cross section of a joystick comprising magnetic means creating magnetic resistance to movement of the joystick.
Fig. 10 schematically shows a cross section of a joystick comprising two electric motors arranged perpendicularly, creating magnetic resistance to movement of the joystick.

### DESCRIPTION OF THE PREFERRED EMBODIMENTS

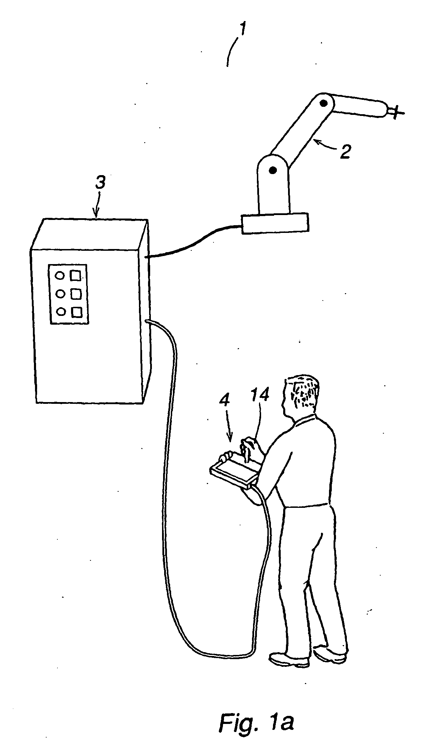

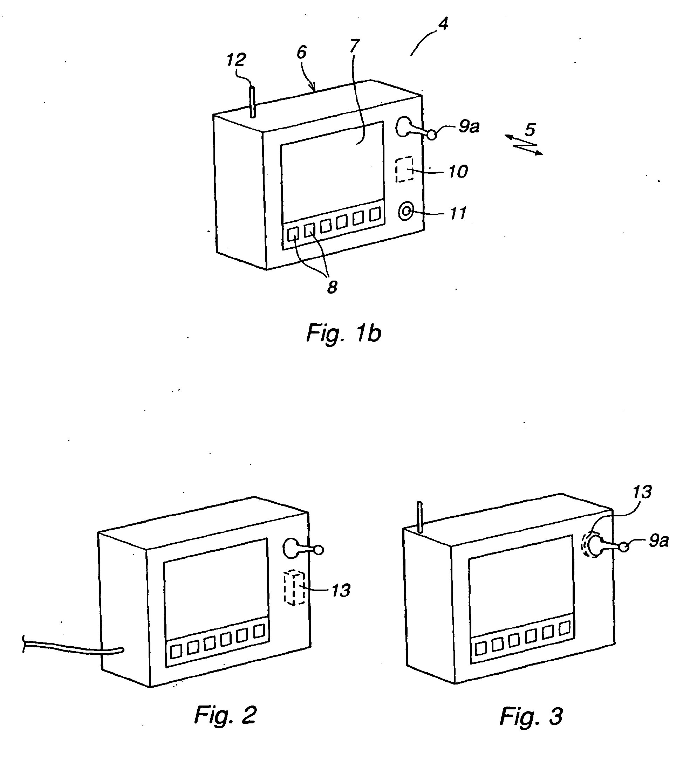

Fig. 1a is a communication system comprising an industrial robot 1, including a manipulator 2 and a control unit 3 for controlling the manipulator. A TPU 4, for teaching and manually operating the manipulator, is communicating with the control unit 3 via a cable connected data link 5. Fig. 1b is a TPU according to the invention, which comprises a portable box 6 including a display means 7, function keys 8, a joystick 9a, indicating means 10 and an emergency stop device 11. The TPU includes an antenna 12 for wireless communication with the control unit 3. The indicating means 10 is arranged to actively or passively indicate to the operator a broken data link 5.

Fig. 2 is a TPU, including active indicating means 10a, which comprises vibrating means 13, arranged, integrated in the TPU. Upon a broken data link 5, the active indicating means 10a is activated and the vibrating means 13 starts to vibrate. This vibration is, during operation, an active indication to the operator that the data link 5 is broken. This tactile feedback is brought by touch perception to the body of an operator bringing the TPU.

Fig. 3 is a TPU in which the active indicating means 10a comprises vibrating means 13 arranged integrated in a joystick 9a. Upon a broken data link, the vibrating means 13 is arranged to start vibrating. This vibration is an active indication to the body of the operator that the data link is broken. The embodiments shown in figs. 1 and 2 also include vibration control means 18 (not shown).

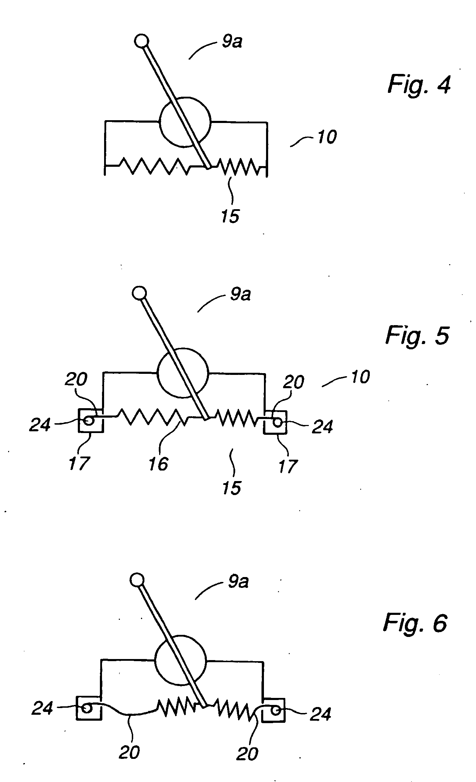

Fig. 4 is a joystick 9a including passive indicating means 10b, schematically shown. The passive indicating mean 10b is integrated in the joystick 9a and is arranged to introduce a mechanical resistance to manual movement of the joystick. The passive indicating means 10b comprises resilient means 15 arranged to passively indicate to the operator a broken data link by a mechanical movement reaction created by loosening or stiffening of the mechanical resistance.

Fig. 5 is a joystick 9a according to the invention including passive indicating means 10b comprising resilient means 15 in the form of four "horizontal" helical springs 16 and four resilience control means 17. A non-elastic thread 20 is arranged as a mechanical connection between the resilient means 15 and the resilience control means 17. The resilience control means 17 comprises at least one regulating means 19 arranged to regulate the spring force of the resilient means 15. The regulating means is arranged to tighten the thread to realize the force feedback in the joystick due to a communicating data link and to relax the thread to reduce the mechanical resistance due to a broken data link. The regulating means 19 is arranged to tighten or loosen the thread 20 by means of an energy supply 22 in order to create a mechanical movement reaction, which is arranged to be stiffer or looser upon indication. The energy supply 22 is a small motor 23 winding and unwinding the thread 20 on an axle 24. When the battery is fully discharged, the axle 24 is locked and prevented from rotating.

Fig. 6 is a joystick with the resilient means creating a looser mechanical movement reaction and thereby indicating a broken data link.

In one embodiment, the indication of a broken data link is combined with a light signal arranged visible for the operator on the exterior of the TPU (not shown).

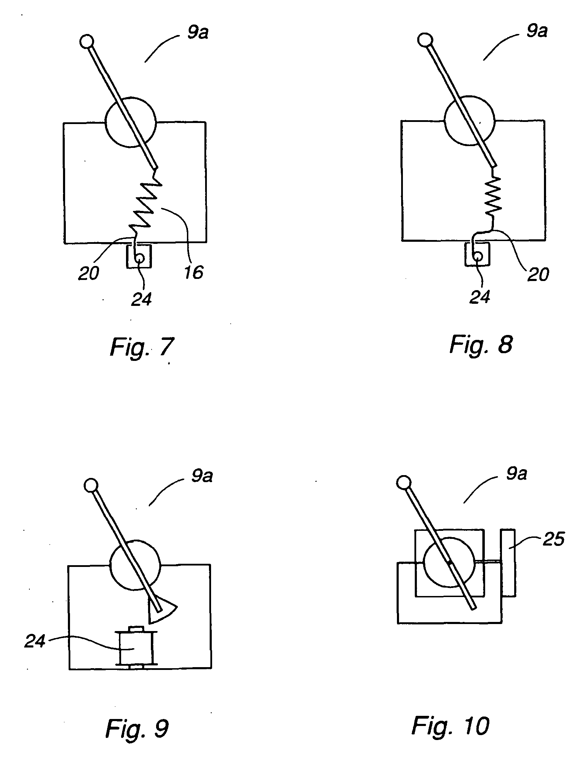

Fig. 7 is a joystick 9a, which comprises one helical spring 16 arranged vertically and provided with a thread 20 connecting the helical spring and a resilience control means 17. In this embodiment, the mechanical resistance to movement is provided for by means of only one helical spring. In fig. 7 the joystick is arranged to create a mechanical movement reaction, which is arranged to be looser upon indication. In fig. 8, the joystick is indicating a broken data link through the relaxed thread 20.

The passive indicating means comprising resilient means is provided with a spring force for returning the actual operator control means to the initial position.

In one embodiment, the spring-loaded force is created by magnetic means 23. The magnetic means is either a permanent magnet 24a (not shown) or an electromagnet 24b. Fig. 9 is a joystick comprising an electromagnet 24b creating magnetic resistance to movement of the joystick. Fig. 10 shows a joystick comprising two electric motors 25 (one not shown) arranged perpendicularly, creating magnetic resistance to movement of the joystick.

While only certain preferred features of the present invention have been illustrated and described, many modifications and changes will be apparent to those skilled in the art. A modification is to implement the tightening/relaxing of the thread by means of a screw and a screw gear. Another modification is to implement the tightening/relaxing of the thread by means of a rack-and pinion gear. Yet another modification is that a solenoid tightens the thread when under power. It is therefore to be understood that all such modifications and changes of the present invention fall within the scope of the claims.

## Claims

1. A portable operator control device, TPU, (4) for teaching and manually operating a manipulator (2) in an industrial robot system comprising a control unit (3), **characterized in that** the TPU (4) is adapted for communication with the control unit (3) via a data link (5) when positioned within a defined area and that the operator control device (4) comprises indicating means (10) arranged to indicate a broken data link (5) through tactile feedback by touch perception to the body (14) of an operator bringing the TPU (4) to a position outside the defined area (A).

2. An operator control device according to claim 1, wherein the indicating means (10) comprises active indication means (10a) operable to active indication to the operator (14) of a broken data link (5):

3. An operator control device according to any of claims 1 or 2, wherein the indicating means (10) comprises passive indication means (10b) operable to passive indication to the operator (14) a broken data link (5).

4. An operator control device according to claim 2 or 3, wherein the indicating means (10a/10b) comprises vibrating means (13) arranged to vibrate the operator control device (4) to indicate to the operator (14) a broken data link.

5. An operator control device according to claim 2, wherein the TPU (4) comprises an operator control means (9) arranged to include the indicating means (10a/10b).

6. An operator control device according to claim 5, wherein the operator control means is a joystick (9a).

7. An operator control device according to claim 5, wherein the passive indicating means (10b) comprises resilient means (15) operable to introduce a mechanical resistance to movement of the operator control means (9).

8. An operator control device according to claim 7, wherein the resilient means (15) includes at least one helical spring (16).

9. An operator control device according to claim 7 or 8, wherein the passive indicating means (10b) comprises resilience control means (17) arranged to regulate the spring-force of the resilient means (15).

10. An operator control device according to claim 5, wherein the passive indicating means (10b) comprises magnetic means (23) operable to introduce a magnetic resistance to movement of the operator control means (9).

11. An industrial robot system, **characterized in that**, the system comprises at least one industrial robot (1), including a manipulator (2), a control unit (3) for controlling the manipulator and a portable operator control device, TPU, according to any of claims 1-10.

12. A method for communication in an industrial robot system comprising an industrial robot (1) including a manipulator (2), a control unit (3) comprising a processor, for controlling the manipulator and a portable operator control device, TPU, (4), which communicates with the control unit (3) via a data link (5) for manually operating the manipulator, the method comprising:
- defining one or a plurality of work areas (A) within which the data link is operable,
- providing the TPU with an indicating means (10) having a tactile feedback,
- upon the TPU leaving the defined area, breaking the data link (5),
- upon a broken data link (5), activating an indicating means (10), which indicates the broken data link (5) to the operator through tactile feedback by touch perception to the body (14) of the operator,
- upon communication reestablishment, deactivating the indicating means (10), which ceases to indicate a broken data link (5) to the operator through tactile feedback by touch perception to the body (14) of the operator.

13. Method according to claim 12, wherein the data link (5) is communicating due to both a steady stream of command messages (26) from the control unit (3) to the TPU (4) and messages (27) in response from the TPU (4) back to the control unit (3).

14. Method according to claim 12, wherein the data link (5) is communicating due to both a steady stream of command messages (26) from the TPU (4) to the control unit (3) and messages (27) in response from the control unit (3) to the TPU (4).

15. Method according to any of claims 13 or 14, wherein the broken data link (5) is due to a broken stream of command messages (26).

16. Method according to any of claims 13 or 14, wherein the broken data link (5) is due to a broken stream of response messages (27).

17. Method according to any of claims 12-14, wherein the data link (5) is broken due to an instruction from the control unit (3).

18. Method according to any of claims 12-17, wherein the data link (5) is brought to communicate via a wireless connection.

19. Method according to any of claim 18, wherein the wireless data link is brought to communicate via a radio link communication connected to a network.

20. Computer program product comprising instructions to be effectuated by a processor to carry out the method claimed in claims 12-19.

21. Computer program product according to claim 20 at least partly supplied over a network such as the Internet.

22. Computer readable medium containing a computer program product in accordance with claims 20 or 21.

23. Use of a portable operator control device according to claims 1 or of an industrial robot system according to claim 11 or of a method according to claims 12-19 for teaching welding operations.

## Patentansprüche

1. Tragbares Kontrollgerät für einen Bediener, TPU, (4), um einen Manipulator (2) in einem industriellen Robotersystem, das eine Kontrolleinheit (3) umfasst, zu unterrichten und manuell zu bedienen, **dadurch gekennzeichnet, dass** das TPU (4) angepasst ist, über eine Datenverbindung (5) mit der Kontrolleinheit (3) zu kommunizieren, wenn es innerhalb eines bestimmten Bereiches positioniert wird, und dass das Kontrollgerät für einen Bediener (4) Anzeigemittel (10) umfasst, die angepasst sind, eine unterbrochenen Datenverbindung (5) durch taktile Rückmeldung dem Körper (14) eines Bedieners mit Hilfe von Berührungswahrnehmung anzuzeigen, der das TPU (4) an eine Position bringt, die außerhalb des bestimmten Bereiches (A) liegt.

2. Kontrollgerät für einen Bediener nach Anspruch 1, wobei das Anzeigemittel (10) aktive Anzeigemittel (10a) umfasst, die für die aktive Anzeige einer unterbrochenen Datenleitung (5) zum Bediener (14) betriebsfähig sind.

3. Kontrollgerät für einen Bediener nach einem der Ansprüche 1 oder 2, wobei das Anzeigemittel (10) passive Anzeigemittel (10b) umfasst, die für die passive Anzeige einer unterbrochenen Datenleitung (5) zum Bediener (14) betriebsfähig sind.

4. Kontrollgerät für einen Bediener nach einem der Ansprüche 2 oder 3, wobei die Anzeigemittel (10a/10b) vibrierende Mittel (13) umfassen, die angeordnet sind, das Kontrollgerät für einen Bediener (4) zu vibrieren, um dem Bediener (14) eine unterbrochene Datenverbindung anzuzeigen.

5. Kontrollgerät für einen Bediener nach Anspruch 2, wobei das TPU (4) ein Bedienerkontrollmittel (9) umfasst, das angeordnet ist, die Anzeigemittel (10a/10b)zu beinhalten.

6. Kontrollgerät für einen Bediener nach Anspruch 5, wobei das Bedienerkontrollmittel ein Joystick (9a) ist.

7. Kontrollgerät für einen Bediener nach Anspruch 5, wobei das passive Anzeigemittel (10b) elastische Mittel (15) umfasst, die betriebsfähig sind, um der Bewegung des Bedienerkontrollmittels (9) einen mechanischen Widerstand zuzuführen.

8. Kontrollgerät für einen Bediener nach Anspruch 7, wobei das elastische Mittel (15) zumindest eine spiralförmige Feder (16) beinhaltet.

9. Kontrollgerät für einen Bediener nach einem der Ansprüche 7 oder 8, wobei das passive Anzeigemittel (10b) Elasitizitätskontrollmittel (17) umfasst, die angeordnet sind, die Federkraft des elastischen Mittels (15) zu regulieren.

10. Kontrollgerät für einen Bediener nach Anspruch 5, wobei das passive Anzeigemittel (10b) magnetische Mittel (23) umfasst, die betriebsfähig sind, der Bewegung des Bedienerkontrollmittels (9) einen magnetischen Widerstand zuzuführen.

11. Ein industrielles Robotersystem, **dadurch gekennzeichnet**, das das System zumindest einen industriellen Roboter (1) umfasst, der einen Manipulator (2), eine Kontrolleinheit (3) zum Kontrollieren des Manipulators und ein tragbares Kontrollgerät für einen Bediener, TPU, nach einem der Ansprüche 1 bis 10 beinhaltet.

12. Ein Verfahren zum Kommunizieren in einem industriellen Robotersystem umfassend einen industriellen Roboter (1), der einen Manipulator (2), eine Kontrolleinheit (3) mit einem Prozessor zum Kontrollieren des Manipulators und ein tragbares Kontrollgerät für einen Bediener, TPU, (4), das mit der Kontrolleinheit (3) über eine Datenverbindung (5) kommuniziert, um den Manipulator manuell zu bedienen, umfasst, wobei das Verfahren umfasst:
- Definieren eines oder mehrerer Arbeitsbereiche (A), innerhalb derer die Datenverbindung betriebsfähig ist,
- Bereitstellen des TPU mit einem Anzeigemittel (10), das eine taktile Rückmeldung aufweist,
- nachdem das TPU den bestimmten Bereich verlassen hat, Unterbrechen der Datenverbindung (5),
- nachdem die Datenverbindung (5) unterbrochen wurde, Aktivieren eines Anzeigemittels (10), das die unterbrochene Datenverbindung (5) dem Bediener durch taktile Rückmeldung dem Körper (14) des Bedieners mit Hilfe von Berührungswahrnehmung anzeigt,
- nach Wiederherstellen der Kommunikation, Deaktivieren des Anzeigemittels (10), das aufhört, dem Bediener eine unterbrochene Datenleitung (5) durch taktile Rückmeldung dem Körper (14) des Bedieners mit Hilfe von Berührungswahrnehmung anzuzeigen.

13. Verfahren nach Anspruch 12, wobei die Datenverbindung (5) sowohl durch einen stetigen Fluss von Kommandonachrichten (26) von der Kontrolleinheit (3) zum TPU (4) und Nachrichten (27) als Antwort vom TPU (4) zurück zu der Kontrolleinheit (3) kommuniziert.

14. Verfahren nach Anspruch 12, wobei die Datenverbindung (5) sowohl durch einen stetigen Fluss von Kommandonachrichten (26) vom TPU (4) zur Kontrolleinheit (3) und Nachrichten (27) als Antwort von der Kontrolleinheit (3) zum TPU (4) kommuniziert.

15. Verfahren nach einem der Ansprüche 13 oder 14, wobei die unterbrochene Datenverbindung (5) auf einen unterbrochenen Fluss von Kommandonachrichten (26) zurückzuführen ist.

16. Verfahren nach einem der Ansprüche 13 oder 14, wobei die unterbrochene Datenverbindung (5) auf einen unterbrochenen Fluss von Antwortnachrichten (27) zurückzuführen ist.

17. Verfahren nach einem der Ansprüche 12 bis 14, wobei die Datenverbindung (5) auf Grund einer Anweisung von der Kontrolleinheit (3) unterbrochen ist.

18. Verfahren nach einem der Ansprüche 12 bis 17, wobei die Datenverbindung (5) durch eine kabellose Verbindung zum Kommunizieren gebracht wird.

19. Verfahren nach Anspruch 18, wobei die kabellose Datenverbindung durch eine Funkverbindungskommunikation, die mit einem Netzwerk verbunden ist, zum Kommunizieren gebracht wird.

20. Computerprogrammprodukt, das Anweisungen umfasst, die durch einen Prozessor das Ausführen des Verfahrens, das in den Ansprüchen 12 bis 19 beansprucht wird, bewirken.

21. Computerprogrammprodukt nach Anspruch 20, das zumindest teilweise über ein Netzwerk wie das Internet bereit gestellt wird.

22. Computerlesbarer Datenträger, der ein Computerprogrammprodukt enthält, das Anspruch 20 oder 21 entspricht.

23. Verwendung eines tragbaren Kontrollgeräts für einen Bediener nach Anspruch 1 oder eines industriellen Robotersystems nach Anspruch 11 oder eines Verfahrens nach Anspruch 12 bis 19, um den Betrieb von Schweißarbeiten zu unterrichten.

## Revendications

1. Dispositif de commande d'opérateur portable, TPU, (4) pour instruire et actionner manuellement un manipulateur (2) dans un système de robot industriel comprenant une unité de commande (3),
**caractérisé en ce que** le TPU (4) est adapté pour communiquer avec l'unité de commande (3) via une liaison de données (5) lorsqu'il est positionné dans une zone définie et **en ce que** le dispositif de commande d'opérateur (4) comprend un moyen d'indication (10) adapté pour indiquer une liaison de données rompue (5) par l'intermédiaire d'un retour tactile par perception de toucher au corps (14) d'un opérateur mettant le TPU (4) dans une position située à l'extérieur de la zone définie (A).

2. Dispositif de commande d'opérateur selon la revendication 1, dans lequel le moyen d'indication (10) comprend un moyen d'indication actif (10a) apte à donner une indication active à l'opérateur (14) d'une liaison de données rompue (5).

3. Dispositif de commande d'opérateur selon la revendication 1 ou 2, dans lequel le moyen d'indication (10) comprend un moyen d'indication passif (10b) apte à donner une indication passive à l'opérateur (14) d'une liaison de données rompue (5).

4. Dispositif de commande d'opérateur selon la revendication 2 ou 3, dans lequel le moyen d'indication (10a/10b) comprend un moyen vibrant (13) adapté pour faire vibrer le dispositif de commande d'opérateur (4) pour indiquer à l'opérateur (14) une liaison de données rompue (5).

5. Dispositif de commande d'opérateur selon la revendication 2, dans lequel le TPU (4) comprend un moyen de commande d'opérateur (9) adapté pour comprendre le moyen d'indication (10a/10b).

6. Dispositif de commande d'opérateur selon la revendication 5, dans lequel le moyen de commande d'opérateur est un levier de commande (9a).

7. Dispositif de commande d'opérateur selon la revendication 5, dans lequel le moyen d'indication passif (10b) comprend un moyen résilient (15) apte à introduire une résistance mécanique au mouvement du moyen de commande d'opérateur (9).

8. Dispositif de commande d'opérateur selon la revendication 7, dans lequel le moyen résilient (15) comprend au moins un ressort hélicoïdal (16).

9. Dispositif de commande d'opérateur selon la revendication 7 ou 8, dans lequel le moyen d'indication passif (10b) comprend un moyen de commande de résilience (17) adapté pour réguler la force de rappel du moyen résilient (15).

10. Dispositif de commande d'opérateur selon la revendication 5, dans lequel le moyen d'indication passif (10b) comprend un moyen magnétique (23) apte à introduire une résistance magnétique au mouvement du moyen de commande d'opérateur (9).

11. Système de robot industriel, **caractérisé en ce que** le système comprend au moins un robot industriel (1), incluant un manipulateur (2), une unité de commande (3) pour commander le manipulateur et un dispositif de commande d'opérateur portable, TPU, selon l'une quelconque des revendications 1 à 10.

12. Procédé de communication dans un système de robot industriel comprenant un robot industriel (1) incluant un manipulateur (2), une unité de commande (3) comprenant un processeur pour commander le manipulateur et un dispositif de commande d'opérateur portable, TPU, (4) qui communique avec l'unité de commande (3) via une liaison de données (5) pour actionner manuellement le manipulateur, le procédé comprenant :
- la définition d'une ou de plusieurs zones de travail (A) dans lesquelles la liaison de données est exploitable,
- fourniture au TPU d'un moyen d'indication (10) ayant un retour tactile,
- lorsque le TPU quitte la zone définie, rupture de la liaison de données (5),
- après la rupture de la liaison de données (5), activation d'un moyen d'indication (10) qui indique la liaison de données rompue (5) à l'opérateur par l'intermédiaire d'un retour tactile par perception de toucher au corps (14) de l'opérateur,
- lors du rétablissement de la communication, désactivation du moyen d'indication (10), qui cesse d'indiquer une liaison de données rompue (5) à l'opérateur par l'intermédiaire d'un retour tactile par perception de toucher au corps (14) de l'opérateur.

13. Procédé selon la revendication 12, dans lequel la liaison de données (5) communique à la fois en raison d'un flux constant de messages d'instruction (26) émis par l'unité de commande (3) vers le TPU (4) et de messages (27) en réponse du TPU (4) vers l'unité de commande (3).

14. Procédé selon la revendication 12, dans lequel la liaison de données (5) communique à la fois en raison d'un flux constant de messages d'instruction (26) émis par le TPU (4) vers l'unité de commande (3) et de messages (27) en réponse de l'unité de commande (3) vers le TPU (4).

15. Procédé selon la revendication 13 ou 14, dans lequel la liaison de données rompue (5) est due à un flux rompu de messages d'instruction (26).

16. Procédé selon la revendication 13 ou 14, dans lequel la liaison de données rompue (5) est due à un flux rompu de messages de réponse (27).

17. Procédé selon l'une quelconque des revendications 12 à 14, dans lequel la liaison de données (5) est rompue en raison d'une instruction provenant de l'unité de commande (3).

18. Procédé selon l'une quelconque des revendications 12 à 17, dans lequel la liaison de données (5) est mise en communication par l'intermédiaire d'une connexion sans fil.

19. Procédé selon la revendication 18, dans lequel la liaison de données sans fil est mise en communication par l'intermédiaire d'une communication radio connectée à un réseau.

20. Produit de programme d'ordinateur comprenant des instructions destinées à être exécutées par un processeur pour mettre en ouvre le procédé des revendications 12 à 19.

21. Produit de programme d'ordinateur selon la revendication 20, au moins partiellement fourni sur un réseau comme Internet.

22. Support lisible par ordinateur contenant un produit de programme d'ordinateur selon la revendication 20 ou 21.

23. Utilisation d'un dispositif de commande d'opérateur portable selon la revendication 1 ou d'un système de robot industriel selon la revendication 11 ou d'un procédé selon les revendications 12 à 19 pour instruire des opérations de soudage.
